# EUROPÄISCHE PATENTANMELDUNG

(11) **EP 3 605 078 A1**
(43) Veröffentlichungstag der Anmeldung: **05.02.2020**
(21) Anmeldenummer: 18186619.5
(22) Anmeldetag: 31.07.2018
(51) Int. Cl.: G01N 27/62

(54) **FLAMMENIONISATIONSDETEKTOR UND VERFAHREN ZUR ANALYSE EINES SAUERSTOFFHALTIGEN MESSGASES**

(71) Anmelder: Siemens Aktiengesellschaft, 80333 München (DE)
(72) Erfinder: Calvo, Ricardo, 76133 Karlsruhe (DE); Kleih, Hans-Günther, 76646 Bruchsal (DE); Richter, Josef, 76185 Karlsruhe (DE); Sutter, Andreas, 76229 Karlsruhe (DE)

(57) **Zusammenfassung**

Bei der Analyse eines sauerstoffhaltigen Messgases (3) auf Basis der Flammenionisation, wird das Messgas (3) im Beisein von Luft (7) und unter Zufuhr eines wasserstoffhaltigen Brenngases (4) in einer Gasflamme (6) verbrannt und ein Ionenstrom (I) aus der Gasflamme (6) zu einer Elektrode (10) gemessen und ausgewertet. Zusätzlich wird die Temperatur (T) der Gasflamme (6) gemessen und mit der gemessenen Temperatur (T) die Querempfindlichkeit der Auswertung des gemessenen Ionenstroms (I) gegenüber dem Sauerstoff in dem Messgas (3) kompensiert.

## Beschreibung

Die Erfindung betrifft einen Flammenionisationsdetektor und ein Verfahren zur Analyse eines sauerstoffhaltigen Messgases.

Flammenionisationsdetektoren (FIDs) dienen zur Messung und Überwachung von organischen Verbindungen wie Kohlenwasserstoffen in Gasen, wobei in einer Gasflamme kohlenstoffhaltige Moleküle ionisiert und durch Messung eines elektrischen Stromes nachgewiesen werden. Dazu werden einem Brenner die im Messgas enthaltenen Kohlenwasserstoffe im Beisein von Luft und unter Zufuhr von Wasserstoff verbrannt. Beim Verbrennen wird der organisch gebundene Kohlenwasserstoffanteil ionisiert. Die Ionen werden durch ein zwischen zwei Elektroden erzeugtes elektrisches Feld in einen Ionenstrom umgesetzt, der gemessen und in einer Auswerteeinrichtung zur Bestimmung der Kohlenwasserstoff-Gesamtkonzentration des Messgases ausgewertet wird. Mittels eines Temperatursensors kann detektiert werden, ob die Gasflamme brennt oder erloschen ist.

Aus der DE 7107607 U ist es bekannt, die Querempfindlichkeit von Flammenionisationsdetektoren gegenüber Sauerstoff dadurch auszugleichen, dass als Brenngas anstelle von reinem Wasserstoff beispielsweise ein Wasserstoff/Helium-Gemisch verwendet wird. Da ein kontinuierlicher Betrieb von Flammenionisationsdetektoren mit einem solchen Brenngasgemisch vergleichsweise teuer ist, wird zur Vermeidung der Sauerstoffquerempfindlichkeit eine Nadelventil- oder Kapillaranordnung am Brenner vorgeschlagen, durch die ein bestimmter Luftstrom von innen der Brennerspitze zugeführt wird.

Zur Lösung desselben Problems sind aus der DE 203 20 366 U1 oder der DE 10 2015 121 534 A1 spezielle Brennerdüsen bekannt, bei denen mehrere Düsenöffnungen zur Bildung mehrerer Flammen vorgesehen sind oder Brennluft durch eine Ausnehmung in der Brennerdüse noch vor der Flamme in das Gasgemisch aus Brenngas und Messgas gelangt.

Aus der US 2003/0085714 A1 ist es bekannt, die Temperatur in einem Flammenionisationsdetektor in einem Bereich über der Flamme zu messen und anhand der gemessenen Temperatur die Gaszuflüsse (Messgas, Brenngas, Brennluft) zu dem Flammenionisationsdetektor zu regeln, um seinen Arbeitspunkt stabil zu halten. Das oben angegebene Problem der Querempfindlichkeit von Flammenionisationsdetektoren gegenüber Sauerstoff tritt hier nicht auf, weil der Flammenionisationsdetektor Bestandteil eines Prozess-Gaschromatographen ist und die Komponenten des zu messenden Gases zeitlich aufgetrennt erhält.

Aus der DE 10 2013 205 139 B3 ist es bekannt, die Messprinzipien Flammenionisationsdetektion und Flammentemperaturanalyse (FTA) in einem Flammenionisationsdetektor miteinander zu kombinieren und dazu die Temperatur der Flamme zu messen. Durch die Auswertung des gemessenen Ionenstroms ist sichergestellt, dass eine schnelle Ansprechzeit vorliegt. Andererseits sichert die Auswertung der Flammentemperatur eine präzise Messung. Eine Auswerteeinheit bestimmt aus beiden Messungen einen Ausgabewert als Maß für die Konzentration entflammbarer Substanzen in dem Messgas. Wie die beiden Einzelergebnisse aus der Flammenionisationsdetektion und der Flammentemperaturanalyse zu dem einen Ausgabewert miteinander verknüpft werden, ist nicht offenbart. Auch hier wird das Problem der Querempfindlichkeit von Flammenionisationsdetektoren gegenüber Sauerstoff nicht angesprochen.

Der Erfindung liegt die Aufgabe zugrunde, die Querempfindlichkeit von Flammenionisationsdetektoren gegenüber Sauerstoff zur verringern, ohne dass dazu spezielle Brenngasgemische oder spezielle Brennerdüsen erforderlich sind.

Gemäß der Erfindung wird die Aufgabe durch den in Anspruch 1 angegebenen Flammenionisationsdetektor und das in Anspruch 3 angegebene Verfahren gelöst.

Vorteilhafte Weiterbildungen des erfindungsgemäßen Flammenionisationsdetektor und des Verfahrens ergeben sich aus den Unteransprüchen.

Gegenstand der Erfindung ist somit ein Flammenionisationsdetektor, mit einem Brenner, um ein sauerstoffhaltiges Messgas im Beisein von Luft und unter Zufuhr eines wasserstoffhaltigen Brenngases in einer Gasflamme zu verbrennen, mit einer Messeinrichtung, um einen Ionenstrom aus der Gasflamme zu einer Elektrode zu messen, mit einer den gemessenen Ionenstrom auswertenden Auswerteeinrichtung und mit einem die Temperatur der Gasflamme messenden Temperatursensor, wobei die Auswerteeinrichtung dazu ausgebildet ist, bei der Auswertung des gemessenen Ionenstroms dessen Querempfindlichkeit gegenüber dem Sauerstoff in dem Messgas mit der gemessenen Temperatur zu kompensieren.

Gegenstand der Erfindung ist ferner ein Verfahren zur Analyse eines sauerstoffhaltigen Messgases auf Basis der Flammenionisation, bei dem das Messgas im Beisein von Luft und unter Zufuhr eines wasserstoffhaltigen Brenngases in einer Gasflamme verbrannt und ein Ionenstrom aus der Gasflamme zu einer Elektrode gemessen und ausgewertet wird, wobei die Temperatur der Gasflamme gemessen wird und mit der gemessenen Temperatur die Querempfindlichkeit der Auswertung des gemessenen Ionenstroms gegenüber dem Sauerstoff in dem Messgas kompensiert wird.

Die Erfindung beruht auf der Beobachtung, dass die Temperatur der Gasflamme kaum messbar von den Kohlenwasserstoffanteilen in dem Messgas, wohl aber von dessen Sauerstoffgehalt abhängig ist. Die Erfindung macht sich diese Beobachtung zunutze, indem anhand der gemessenen Flammentemperatur die Querempfindlichkeit des Flammenionisationsdetektors gegenüber dem Sauerstoffgehalt des Messgases kompensiert wird. Es werden keine speziellen und teuren Brenngasgemische mehr benötigt, und es sind auch keine speziell konstruierten Brennerdüsen erforderlich.

Die Erfindung wird im Folgenden beispielhaft anhand der Zeichnungen näher erläutert; im Einzelnen zeigen:
- Fig. 1: einen Flammenionisationsdetektor und
- Fig. 2: ein Beispiel für die Abhängigkeit des Ionenstroms und der Flammentemperatur von dem Sauerstoffgehalt eines Nullgases.

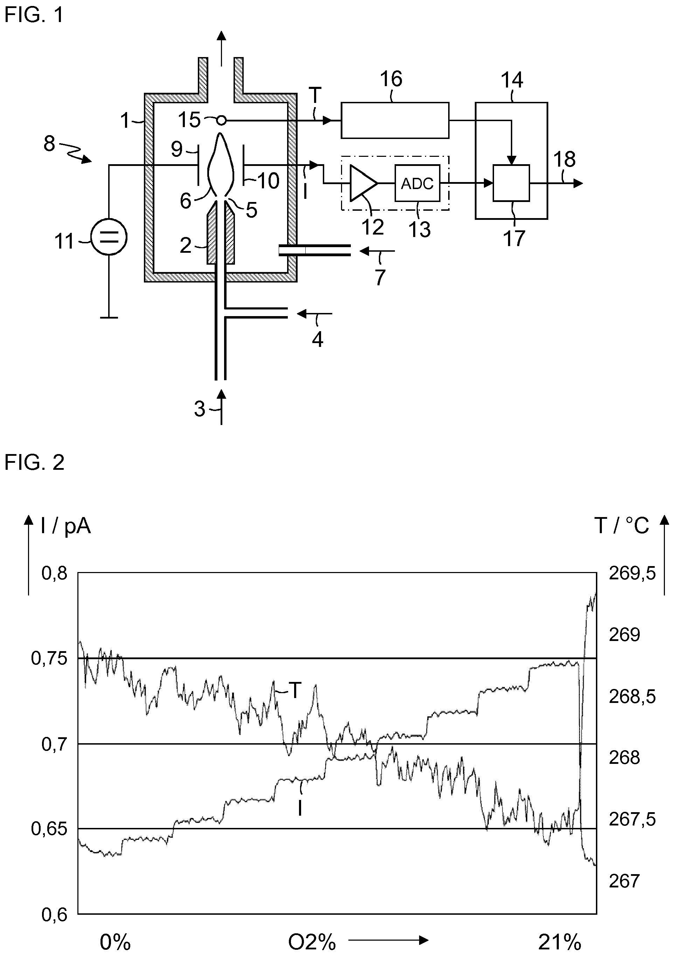

Fig. 1 zeigt in vereinfachter schematischer Darstellung einen Flammenionisationsdetektor mit einem Brennraum 1 und einem darin angeordneten oder in ihn hineinragenden Brenner (Brenndüse) 2. Dem Brenner 2 werden eingangsseitig ein sauerstoffhaltiges Messgas 3 und ein wasserstoffhaltiges Brenngas 4, vorzugsweise reiner Wasserstoff, zugeführt, die vor oder in dem Brenner 2 gemischt und an einer ausgangsseitigen Mündung 5 des Brenners 2 in einer Flamme 6 verbrannt werden. Zusätzlich wird sauerstoffhaltige Brennluft 7, vorzugsweise gereinigte kohlenwasserstoff-freie Umgebungsluft, mit konstanten rund 21 Vol.-%, in den Brennraum 2 geleitet.

Beim Verbrennen des Messgases 3 wird der organisch gebundene Kohlenwasserstoffanteil ionisiert. Um diesen Kohlenwasserstoffanteil zu messen, ist eine Messeinrichtung 8 mit zwei Elektroden 9, 10 vorgesehen, zwischen denen die Gasflamme 6 brennt. Alternativ zu dem gezeigten Beispiel kann eine der Elektroden von dem Brenner 2 gebildet und die andere Elektrode über der Flamme 6 angeordnet sein. Mittels einer Spannungsquelle 11 wird zwischen den Elektroden 9, 10 ein elektrisches Feld erzeugt, aufgrund dessen die Ionen aus der Gasflamme 6 in einem Ionenstrom I zu einer der Elektroden 9, 10 fließen. Der Ionenstrom I wird mittels eines hochempfindlichen Verstärkers 12 gemessen, digitalisiert (ADC 13) und in einer Auswerteeinrichtung 14 zur Bestimmung der Kohlenwasserstoff-Gesamtkonzentration in dem Messgas 3 ausgewertet.

In oder unmittelbar über der Gasflamme 6 ist ein Temperatursensor 15, z. B. ein Thermistor oder Thermoelement, angeordnet, der die Flammentemperatur T erfasst und über eine Temperaturmessschaltung 16 der Auswerteeinrichtung 14 zuführt.

Der Flammenionisationsdetektor weist eine Querempfindlichkeit gegenüber dem Sauerstoff in dem Messgas 3 auf, weil der gemessene Ionenstrom I nicht nur von dem Kohlenwasserstoffanteil des Messgases 3 sondern auch von seinem Sauerstoffgehalt abhängig ist.

Fig. 2 zeigt beispielhaft die Abhängigkeit des gemessenen Ionenstroms I und der Flammentemperatur T von dem Sauerstoffgehalt O2% eines kohlenwasserstoff-freien Nullgases, wobei der Sauerstoffgehalt O2% hier von links nach rechts in 10 Stufen von 0 % auf 21 % erhöht wird. Mit zunehmendem Sauerstoffgehalt O2% nimmt die Flammentemperatur T ab, wohingegen der Ionenstrom I ansteigt.

Bei einem kohlenwasserstoffhaltigen Messgas 3 nehmen der Ionenstrom I und die Flammentemperatur T mit zunehmendem Sauerstoffgehalt O2% des Messgases 3 ab. Das heißt, dass das die Kohlenwasserstoff-Gesamtkonzentration des Messgases 3 angebende FID-Messsignal bei einem im Vergleich zu dem Sauerstoffanteil bei der Kalibrierung höheren Sauerstoffgehalt O2% zu niedrig und bei niedrigerem Sauerstoffgehalt O2% zu hoch ist. Weiterhin konnte aber festgestellt werden, dass eine Änderung des Kohlenwasserstoffanteils des Messgases 3 keinen oder nur einen vernachlässigbaren Einfluss auf die Flammentemperatur T hat. Die Flammentemperatur T ermöglicht daher eine indirekte Messung des Sauerstoffgehalt O2% und damit eine Korrektur des FID-Messsignals.

Die Auswerteeinrichtung 14 enthält daher eine Korrektureinrichtung 17, in der bei der Auswertung des gemessenen Ionenstroms I dessen Querempfindlichkeit gegenüber dem Sauerstoff in dem Messgas 3 mit der gemessenen Flammentemperatur T kompensiert wird. Das entsprechend korrigierte Auswerteergebnis aus dem gemessenen Ionenstrom I wird als Ergebnis 18 der Bestimmung der Kohlenwasserstoff-Gesamtkonzentration des Messgases 3 ausgegeben. Anstelle eines Wasserstoff/Helium-Gemischs, das vergleichsweise teuer ist, kann daher reiner Wasserstoff als Brenngas 4 verwendet werden.

## Patentansprüche

1. Flammenionisationsdetektor, mit einem Brenner (2), um ein sauerstoffhaltiges Messgas (3) im Beisein von Luft (7) und unter Zufuhr eines wasserstoffhaltigen Brenngases (4) in einer Gasflamme (6) zu verbrennen, mit einer Messeinrichtung (8), um einen Ionenstrom (I) aus der Gasflamme (6) zu einer Elektrode (10) zu messen, mit einer den gemessenen Ionenstrom (I) auswertenden Auswerteeinrichtung (14) und mit einem die Temperatur (T) der Gasflamme (6) messenden Temperatursensor (15), wobei die Auswerteeinrichtung (14) dazu ausgebildet ist, bei der Auswertung des gemessenen Ionenstroms (I) dessen Querempfindlichkeit gegenüber dem Sauerstoff in dem Messgas (3) mit der gemessenen Temperatur (T) zu kompensieren.

2. Flammenionisationsdetektor nach Anspruch 1, **dadurch gekennzeichnet, dass** das wasserstoffhaltige Brenngas (4) aus reinem Wasserstoff besteht.

3. Verfahren zur Analyse eines sauerstoffhaltigen Messgases (3) auf Basis der Flammenionisation, bei dem das Messgas (3) im Beisein von Luft (7) und unter Zufuhr eines wasserstoffhaltigen Brenngases (4) in einer Gasflamme (6) verbrannt und ein Ionenstrom (I) aus der Gasflamme (6) zu einer Elektrode (10) gemessen und ausgewertet wird, wobei die Temperatur (T) der Gasflamme (6) gemessen wird und mit der gemessenen Temperatur (T) die Querempfindlichkeit der Auswertung des gemessenen Ionenstroms (I) gegenüber dem Sauerstoff in dem Messgas (3) kompensiert wird.

4. Verfahren nach Anspruch 3, **dadurch gekennzeichnet, dass** als wasserstoffhaltiges Brenngas (4) reiner Wasserstoff zugeführt wird.
